# EUROPÄISCHE PATENTSCHRIFT

(11) **EP 1 828 966 B1**
(45) Veröffentlichungstag und Bekanntmachung des Hinweises auf die Patenterteilung: **07.09.2011**
(21) Anmeldenummer: 05825189.3
(22) Anmeldetag: 22.12.2005
(51) Int. Cl.: G06K 19/077

(54) **CHIPKARTE MIT INTEGRIERTEM SIM-MODUL**
CHIP CARD WITH INTEGRATED SIM-MODULE
CARTE A PUCE COMPORTANT UN MODULE SIM INTEGRE

(30) Priorität: 23.12.2004 DE 202004019794 U
(43) Veröffentlichungstag der Anmeldung: 05.09.2007
(73) Patentinhaber: Mühlbauer AG, 93426 Roding (DE)
(72) Erfinder: STEIF, Richard, 93489 Schorndorf-obertraubenbach (DE)
(74) Vertreter: Schmidt, Steffen
(86) Internationale Anmeldenummer: PCT/EP2005/057099
(87) Internationale Veröffentlichungsnummer: WO 2006/069965

(56) Entgegenhaltungen:
- EP-A- 1 163 635
- DE-A1- 19 906 570
- FR-A- 2 794 264
- FR-A- 2 805 206
- US-B1- 6 561 432

## Beschreibung

Die Erfindung betrifft eine Chipkarte mit einem flach ausgebildeten Kartengrundkörper und einem integrierten ersten rechteckförmigen SIM-Modul gemäß dem Oberbegriff des Patentanspruches 1 und eine Stanzform für das Ausstanzen des ersten rechteckförmigen SIM-Moduls in dem Kartengrundkörper der Chipkarte gemäß dem Oberbegriff des Patentanspruches 10.

Derartige Chipkarten werden herkömmlicherweise für den Mobilfunkbetrieb verwendet. Die Abmessungen und der Aufbau der Chipkarten sowie die Form und die Positionierung der zugehörigen Kontaktflächen sind weitestgehend durch internationale Normen festgelegt.

In diesem Zusammenhang verwendete SIM-Module, die eine genormte Größe aufweisen, werden üblicherweise durch einen Vorstanzvorgang einer Chipkarte in Standardgröße vorgegeben. Das SIM-Modul ist dann nur noch über einige wenige Verbindungsstellen mit dem Kartengrundkörper verbunden. Durch Drücken auf das SIM-Modul - beispielsweise mit dem Daumen - wird dieses dann vom restlichen Kartengrundkörper gelöst.

EP 0 535 436 A2 betrifft eine derartige Chipkarte mit einem SIM-Modul, welches mittels drei Haltestege mit dem Kartengrundkörper verbunden ist. Jeder Haltesteg ist jeweils einer Seitenkante des SIM-Moduls zugeordnet. Aus EP 0 521 778 B1 ist zudem eine Chipkarte bekannt, in welcher das rechteckförmige SIM-Modul mittels eines Haltesteges an jeder Seitenkante des Rechtecks gehalten wird.

Aus DE 198 06 789 C2 ist eine Chipkarte mit einem SIM-Modul bekannt, bei der das SIM-Modul nahezu vollständig entlang einer seiner Seitenkanten noch mit dem Kartengrundkörper verbunden ist und an einer gegenüberliegenden Seitenkante des rechteckförmigen SIM-Moduls mittels eines Haltesteges in der Chipkarte gehalten wird.

Aus EP 1163635 B1 ist eine weitere Chipkarte bekannt.

Derartige SIM-Modulaufweisende Chipkarten ergeben häufig beim Herausdrücken beziehungsweise Heraustrennen des SIM-Moduls unnötig schwierige und zeitaufwendige Handhabungen.

Weiterhin sind sogenannte Mini-SIM-Module des Formats FF3 bekannt, die geringere Abmessungen, als die herkömmlichen SIM-Module des Formats ID0000 aufweisen.

Es ist somit Aufgabe der vorliegenden Erfindung, eine Chipkarte mit einem flachen Kartengrundkörper und einem integrierten ersten rechteckförmigen SIM-Modul zur Verfügung zu stellen, die dass Heraustrennen eines ersten SIM-Moduls und eines gegenüber dem ersten SIM-Modul kleineren zweiten SIM-Moduls auf einfache Weise derart ermöglicht, dass immer zuerst das erste SIM-Modul aus der Chipkarte herausgetrennt wird. Des Weiteren liegt der vorliegenden Erfindung die Aufgabe zugrunde, eine Stanzform für das Vorstanzen von ersten und zweiten SIM-Modulen in Chipkarten mit den obigen Eigenschaften zur Verfügung zu stellen.

Diese Aufgabe wird bezüglich der Chipkarten durch die Merkmale des Anspruches 1 und bezüglich der Stanzform durch die Merkmale des Anspruches 10 gelöst.

Ein wesentlicher Punkt der Erfindung liegt darin, dass bei einer Chipkarte mit einem flach ausgebildeten Kartengrundkörper und einem integrierten rechteckförmigen ersten SIM-Modul, wobei das erste SIM-Modul mittels erster Schlitzbereiche vom Kartengrundkörper getrennt und durch die ersten Schlitzbereiche überbrückende erste Haltestege am Grundkörper derart befestigt ist, dass es von Hand herausdrückbar ist, wobei die ersten Haltestege jeweils einer von zwei sich gegenüberliegenden ersten Seitenkanten des ersten SIM-Moduls zugeordnet sind, wobei ein im ersten SIM-Modul integriertes zweites SIM-Modul, welches mittels zweiter Schlitzbereiche vom ersten SIM-Modul getrennt ist und am ersten SIM-Modul durch die zweiten Schlitzbereiche überbrückende, mindestens zwei zweite Haltestege derart befestigt ist, dass es von Hand herausdrückbar ist, wobei sich die zweiten Haltestege entlang zweier sich gegenüberliegenden zweiten Seitenkanten des zweiten SIM-Moduls erstrecken und an mindestens einem der ersten Haltestege (8, 9, 10, 11) ober- und/oder unterseitig eine Kerbe angeordnet ist, die sich in Haltestegtängsrichtung erstreckt.

Die zwei sich gegenüberliegenden zweiten Seitenkanten des zweiten SIM-Moduls sind senkrecht zu den zwei sich gegenüberliegenden ersten Seitenkanten des ersten SIM-Moduls in einer gemeinsamen Ebene verlaufend angeordnet.

Sowohl das erste als auch das zweite SIM-Modul weisen eine rechteckförmige Form auf, wobei das zweite SIM-Modul als Mini-SIM-Modul kleinere Abmessungen gegenüber denjenigen des ersten SIM-Moduls aufweist.

Eine Chipkarte mit derartigen darin angeordneten ersten und zweiten SIM-Modulen zeichnet sich dadurch aus, dass bei einem Herausdrücken beider SIM-Module immer zuerst das großflächigere erste SIM-Modul von dem restlichen Kartengrundkörper gelöst wird und nach dem Abtrennen dieses ersten SIM-Moduls ein anschließendes Heraustrennen des Mini-SIM-Moduls möglich ist.

Durch die Ausbildung der ersten und zweite Haltestege derart, dass die Länge der ersten Haltestege 1,0 bis 1,5 mm, bevorzugt ca. 1,2 mm, und die Breite der ersten Haltestege 1,0 bis 2,0 mm, bevorzugt ca. 1,5 mm betragen und die Länge der zweiten Haltestege 9,0 bis 11,0 mm, bevorzugt 10,0 mm beträgt, ist sichergestellt, dass sich immer zuerst das erste SIM-Modul von dem Kartenkartenkörper löst und erst anschließend aufgrund der größeren Länge der zweiten Haltestege ein Heraustrennen des Mini-SIM-Moduls stattfindet.

Wird beim Aufbringen einer Kraft zunächst einer der ersten Haltestege durchgedrückt, so hat dies in aller Regel zur Folge, dass der benachbarte erste Haltesteg ebenfalls durchtrennt wird, da auf dieser Seite eine geringere Kraft zum Durchtrennen aufzubringen ist, als auf der gegenüberliegenden parallel dazu verlaufenden Seite. Aufgrund der Tatsache, dass bei dem ersten SIM-Modul auf der gegenüberliegenden Seite noch immer zwei Haltestege vorhanden sind, schwenkt das SIM-Modul um diese beiden Haltestege nach außen und kann dann aufgrund der Dehnung der ersten Haltestege abgezogen werden.

Erfindungsgemäß weisen die ersten und auch die zweiten Haltestege oberseitig und gegebenenfalls auch unterseitig jeweils eine Kerbe auf, die sich in Haltesteglängsrichtung, also in Verlaufsrichtung der sich anschließenden Schlitzbereiche erstreckt. Hierbei können die Kerben mit einem oder beiden Enden gegenüber dem/den unmittelbar benachbarten Schlitzbereich(en) mit einer geringen Distanz beabstandet sein, die zwischen 0,05 bis 0,2 mm, bevorzugt 0,1 mm ist. Derartige Kerben erleichtern das Herausbrechen der SIM-Module auf einfache und saubere Weise.

Vorrangig wird eine derartige Kerbe dadurch erzeugt, dass mit einem in der Tiefe einstellbaren Messer die Haltestege bevorzugt entlang der Außenkontur der SIM-Module eingekerbt werden. Hierdurch erhält man eine Sollbruchstelle.

Allerdings sind einige der zu verwendeten Materialien, wie beispielsweise ABS, PC etc. sehr kerbwirkungsanfällig, weshalb sie vorzeitig abbrechen und erforderliche Biege- und Torsionstests unter Umständen nicht erfüllen können. Um die Kerbwirkung zu reduzieren, können die Kerben erfindungsgemäß mit der Distanz zu den Randbereichen der Haltestege beabstandet werden, sodass weiterhin ein geringer Distanzbereich mit der vollständigen Stärken des Kartengrundkörpers erhalten bleibt.

Derartige Kerben werden vorteilhaft durch einen Einprägevorgang gebildet. Hierbei wird das Material des Kartengrundkörpers gestaucht, wodurch sich eine Verfestigung einstellt, die unter Umständen zu einem vorteilhaft spröderen Bruch führen kann.

Bevorzugt kann an der einen ersten Seitenkante der Abstand zwischen den an dieser Seitenkante angeordneten ersten Haltestege größer sein, als der Abstand zwischen den ersten Haltestegen an der gegenüberliegenden Seitenkante. Hierdurch wird eine Präferenz insofern erzeugt, als dass die Stege an einer der beiden Seitenkanten eher durchbrechen als auf der anderen. Darüberhinaus können die ersten Haltestege an der einen Seitenkante symmetrisch zu einer Mittellinie des SIM-Moduls und die ersten Haltestege an der anderen Seitenkante unsymmetrisch zur Mittellinie des SIM-Moduls angeordnet sein. Es kann sich hierbei um die Längs- oder Quermittellinie handeln.

Zudem bezieht sich die Erfindung auf eine Stanzform für das Vorstanzen des ersten rechteckförmigen SIM-Moduls in dem Kartengrundkörper der Chipkarten und des zweiten rechteckförmigen SIM-Moduls in dem ersten SIM-Modul mit ersten und zweiten die Außenkonturen der SIM-Module vorgebenden im Wesentlichen umlaufenden Stanzstegen, wobei der erste Stanzsteg an vier Stellen mit jeweils einer ersten Lücke und der zweite Stanzsteg an zwei Stellen mit jeweils einer zweiten Lücke unterbrochen sind. Die ersten Lücken sind jeweils paarweise und die zweiten Lücken jeweils einzeln in zwei sich gegenüberliegenden geradlinigen Abschnitten der Stanzstege angeordnet.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Es zeigen:
- Fig. 1a: in einer Draufsicht eine Chipkarte mit einem ersten und einem zweiten SIM- Modul gemäß einer Ausführungsform der Erfindung;
- Fig. 1b: die in Fig. 1a gezeigte Ausführungsform der Erfindung mit weiteren Abmaßen;
- Fig. 2a: in einer Draufsicht eine Chipkarte mit einem ersten und einem zweiten SIM- Modul gemäß einer zweiten Ausführungsform der Erfindung;
- Fig. 2b: die in Fig. 2a gezeigte zweite Ausführungsform der Erfindung;
- Fig. 3a: in einer Draufsicht eine Chipkarte mit einem ersten und einem zweiten SIM- Modul gemäß einer dritten Ausführungsform der Erfindung;
- Fig. 3b: die in Fig. 3a gezeigte dritte Ausführungsform der Erfindung;
- Fig. 4a: in einer Draufsicht eine Chipkarte mit einem ersten und einem zweiten SIM- Modul gemäß einer vierten Ausführungsform der Erfindung; und
- Fig. 4b: die in Fig. 4a gezeigte vierte Ausführungsform der Erfindung.

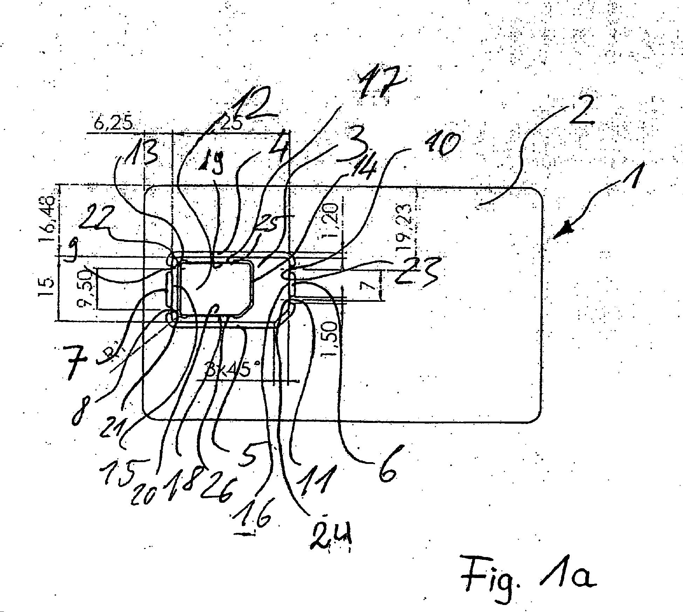

Die in der Figur 1a dargestellte Chipkarte 1 setzt sich aus dem Kartengrundkörper 2 und dem ersten SIM-Modul 3 zusammen. Derartige Chipkarten können durch unterschiedlichste Herstellungsverfahren, wie Laminier- oder Spritzgussverfahren erzeugt werden. Durch derartige Herstellungsverfahren wird der Kartengrundkörper 2 von rechteckiger Form erzeugt, wobei dessen Ecken zur besseren Handlichkeit abgerundet sind. In dem mittleren linken Bereich des Kartengrundkörpers 2 kann sich ein hier nicht näher dargestellter im inneren der Chipkarte eingebetteter Mikrochip befinden.

Bei der dargestellten Chipkarte 1 handelt es sich um eine Standardchipkartengröße. Für Mobiltelefone werden jedoch kleinere SIM-Module benötigt. Diese werden, wie im vorliegenden Fall, durch Vorstanzen der Form des ersten SIM-Moduls 3 aus dem Kartengrundkörper 2 erzeugt.

Das SIM-Modul 3 weist ebenfalls eine rechteckige Grundform aus, wobei die rechte untere Ecke abgeschrägt ist.

Das erste SIM-Modul ist mit an seinen Längsseiten entlang verlaufenden Schlitzbereichen 4, 5 und an dessen Querseiten sich entlangerstreckenden Schlitzbereichen 6, 7 vom restlichen Kartengrundkörper 2 getrennt.

An der linken und rechten Querseite des ersten SIM-Moduls sind jeweils zwei Unterbrechungen in den entlang der Außenkontur des SIM-Moduls 3 verlaufenden Schlitzbereichen, deren Ausbildung zu Haltestegen 8, 9, 10 und 11 führen.

Ein zweites kleineres Mini-SIM-Modul 12 ist innerhalb des ersten SIM-Moduls 3 angeordnet und weist an seiner linken und rechten Seitenkante zweite Schlitzbereiche 13, 14 auf, deren außenkonturartiger Verlauf entlang der Längsseiten des zweiten SIM-Moduls als Haltestege 17, 18 ausgebildet unterbrochen sind. Die Abmessungen dieser zweiten Haltestege sind 10 mm in Ihrer Länge. Die Abmessungen der ersten Haltestege hingegen liegen in einem Bereich von ca. 1,5 mm. Die Abmessungen der ersten Schlitzbereiche des ersten SIM-Moduls bezüglich ihrer Breite sind 1,20 mm.

Das gesamte erste SIM-Modul 3 weist eine Länge von 25 mm und eine Breite von 15 mm auf. Die Länge des zweiten SIM-Moduls 12 ist 15 mm und dessen Breite beträgt 12 mm.

Erste Seitenkanten 15, 16 des ersten SIM-Moduls 3, welche die ersten Haltestege 8, 9, 10 und 11 aufweisen, sind senkrecht zu dem Verlauf der zweiten Seitenkanten 19, 20 des zweiten SIM-Moduls 12 angeordnet.

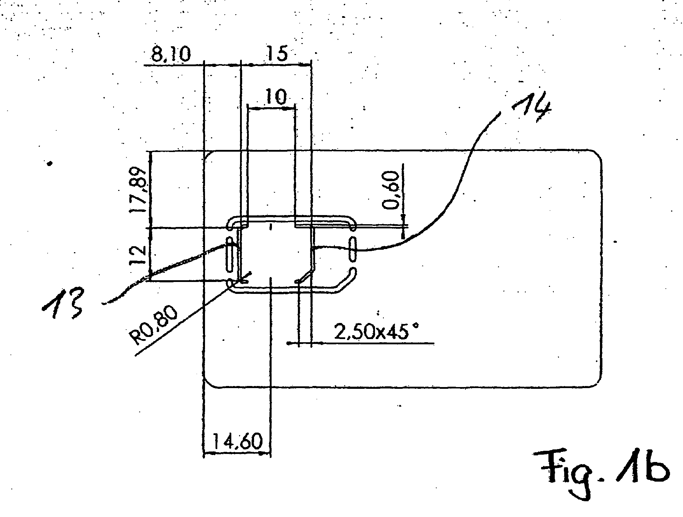

Die ersten Haltestege 8, 9, 10 und 11 weisen ober- und unterseitig entlang des Außenkonturverlaufes des Modules Kerben 21, 22, 23 und 24 ebenso wie die zweiten Haltestege 17, 18 mit den Kerben 25 und 26 auf. Diese Kerben ermöglichen ein besseres Heraustrennen beziehungsweise Herausbrechen der einzelnen SIM-Module aus dem Grundkartenkörper 2. In Fig. 1b wird dieselbe bereits in Fig. 1a gezeigte Chipkarte gemäß einer ersten Ausführungsform der Erfindung gezeigt. In dieser Darstellung sind die Abmaße der Schlitzbereiche 13, 14 wiedergegeben.

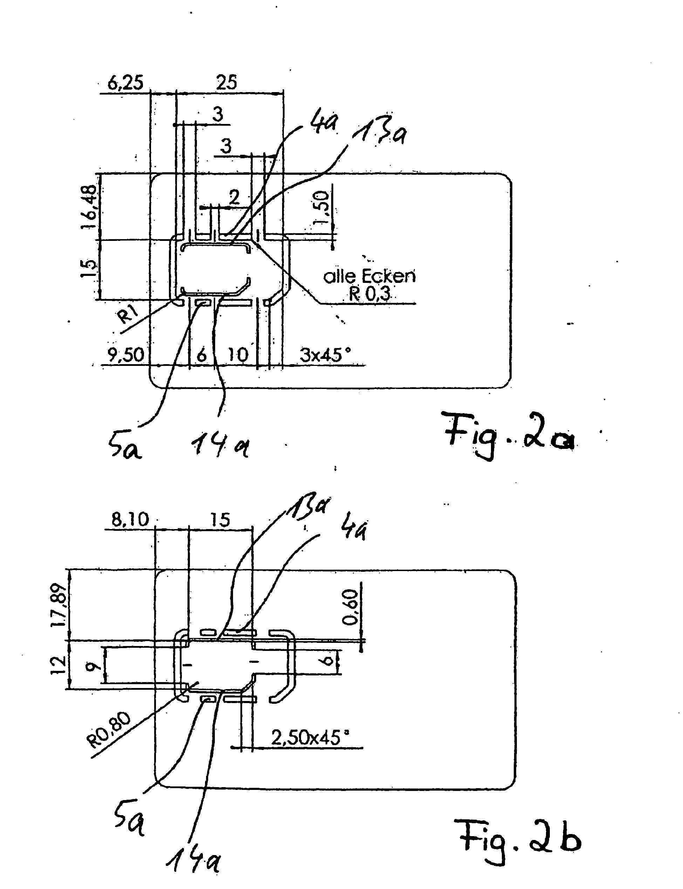

In Fig. 2a ist gemäß einer zweiten Ausführungsform der Erfindung eine Chipkarte mit einem ersten und einem zweiten SIM-Modul dargestellt. Diese zweite Ausführungsform unterscheidet sich von der in den Figuren 1a und 1b dargestellten ersten Ausführungsform darin, dass zweite Schlitzbereiche 13a und 14a in Längsrichtung der Chipkarte ausgerichtet sind. Zudem sind die ersten Schlitzbereiche 4a und 5a entsprechend den in Figuren 2a und 2b wiedergegebenen Darstellungen unterbrochen. In Fig. 2b ist wiederum die in Fig. 2a bereits dargestellte Chipkarte mit weiteren Abmaßen wiedergegeben.

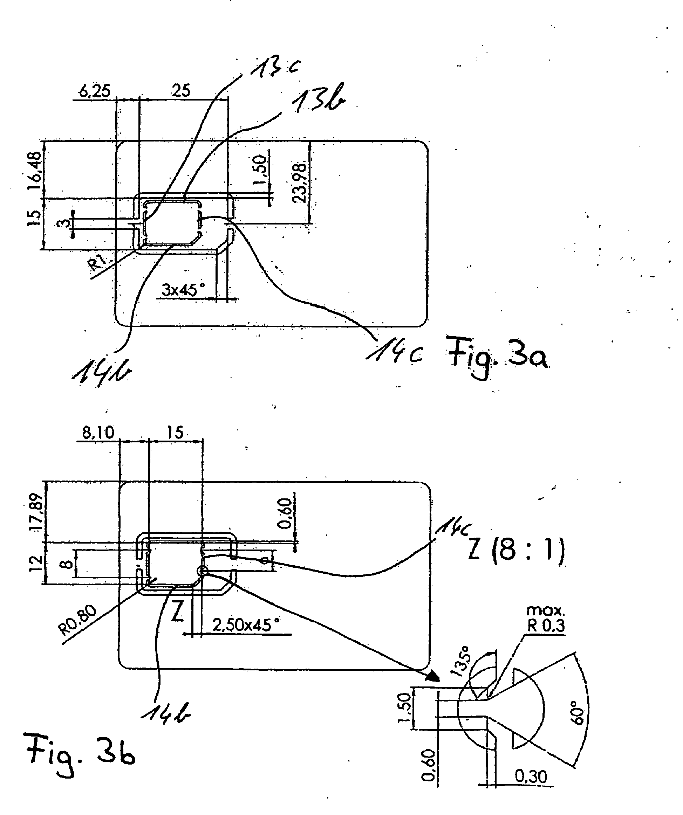

In Fig. 3a ist die Chipkarte gemäß einer dritten Ausführungsform der Efindung wiedergegeben. Der Darstellung ist deutlich zu entnehmen, dass die zweiten Schlitzbereiche 13b, 13c und 14b, 14c gegenüber den in den Figuren 1a und 1b wiedergegebenen Ausführungsformen unterschiedlich angeordnet und unterschiedliche Unterbrechungen aufweisen. In Fig. 3b ist die in Fig. 3a wiedergegebene Chipkarte mit weiteren Abmaßen dargestellt. Zudem ist in Fig. 3b ein herausgezoomter Ausschnitt im Bereich einer Unterbrechung des zweiten Schlitzbereiches 14b und 14c dargestellt.

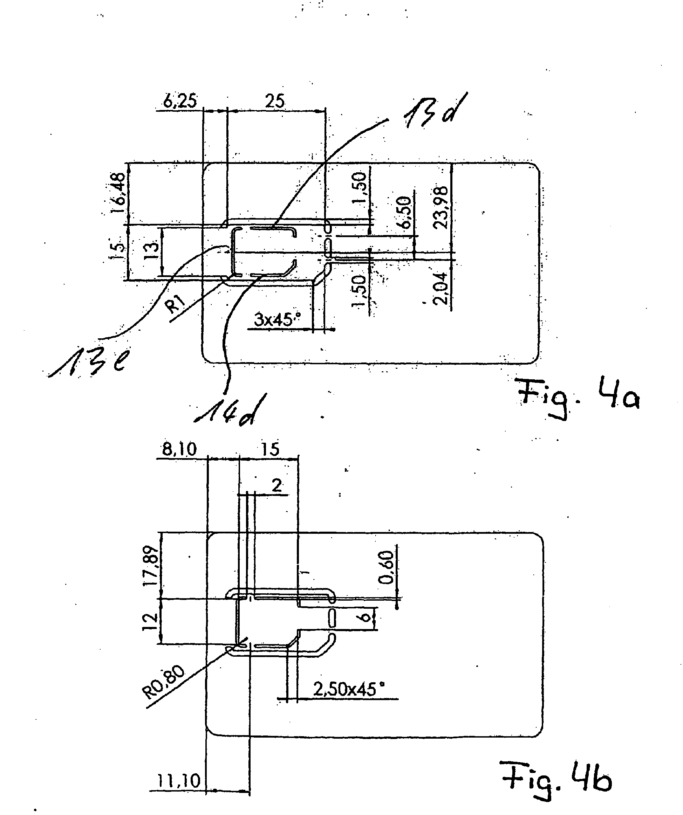

In Fig. 4a ist eine vierte Ausführungsform der Chipkarte gezeigt. Die zweiten Schlitzbereiche 13d und 13e sowie 14d weisen wiederum eine andere Anordnung mit anders angeordneten Unterbrechungen auf. In Fig. 4b ist dieselbe Chipkarte mit weiteren Abmaßen dargestellt.

Erfindungsgemäß kann ein Herstellungsverfahren zur Herstellung einer derartigen Chipkarte folgende drei Stufen umfassen:

Zunächst wird eine Kontur für das SIM-Modul 3 mit einem vorgefertigten Werkzeug gestanzt. Anschließend wird die Kontur des zweiten SIM-Moduls 12 gestanzt. Nun findet ein Prägen der Sollbruchstellen für beide Formfaktoren, die die Konturenlinien darstellen, statt.

Es ist somit möglich, in einem oder zwei Prozessschritten die beiden Konturen zu erzeugen. Hierbei muss darauf geachtet werden, dass das Herausbrechen durch den Anwender, nämlich zum Beispiel den Handybenutzer, von Hand ohne weitere Hilfsmittel möglich sein muss.

Die Reihenfolge des Ausbrechens bezüglich der verschiedenen Konturen sollte konstruktiv vorbestimmt sein. Dass heißt, es wird zuerst die bisherige SIM-Karte herausgebrochen und anschließend wird aus der SIM-Karte die Mini-SIM-Karte zur Aufnahme eines Moduls herausgebrochen.

### Bezugszelchenliste

- 1: Chipkarte
- 2: Kartengrundkörper
- 3: erstes SIM-Modul
- 4, 5, 6, 7; 4a, 5a: erste Schlitzbereiche
- 8, 9, 10, 11: erste Haltestege
- 12: zweites SIM-Modul
- 13, 14, 13a, 14a; 13b, 13c, 14b, 14c;:
- 13d, 13e, 14d: zweite Schlitzbereiche
- 15, 16: erste Seitenkanten
- 17, 18: zweite Haltestege
- 19, 20: zweite Seitenkanten
- 21, 22, 23, 24: Kerben der ersten Haltestege
- 25, 26: Kerben der zweiten Haltestege

## Patentansprüche

1. Chipkarte mit einem flach ausgebildeten Kartengrundkörper (2) und einem integrierten rechteckförmigen ersten SIM-Modul (3), wobei das erste SIM-Modul (3) mittels erster Schlitzbereiche (4, 5, 6, 7) vom Kartengrundkörper (2) getrennt und durch die ersten Schlitzbereiche (4-7) überbrückende erste Haltestege (8-11) am Grundkörper (2) derart befestigt ist, dass es von Hand herausdrückbar ist, wobei die ersten Haltestege (8-11) jeweils einer von zwei sich gegenüberliegenden ersten Seitenkanten (15, 16) des ersten SIM-Moduls (3) zugeordnet sind, wobei ein im ersten SIM-Modul (3) integriertes zweites SIM-Modul (12), mittels zweiter Schlitzbereiche (13, 14) vom ersten SIM-Modul (3) getrennt ist und am ersten SIM-Modul (3) durch die zweiten Schlitzbereiche (13, 14) überbrückende, mindestens zwei zweite Haltestege (17. 18) derart befestigt ist, dass es von Hand herausdrückbar ist, wobei sich die zweiten Haltestege (17, 18) entlang zweier sich gegenüberliegenden zweiten Seitenkanten (19, 20) des zweiten SIM-Moduls (12) erstrecken und an mindestens einem der ersten Haltestege (8, 9, 10, 11) ober- und/oder unterseitig eine Kerbe (21, 22, 23, 24; 25, 26) angeordnet ist, die sich in Haltesteglängsrichtung erstreckt.

2. Chipkarte nach Anspruch 1,
**dadurch gekennzeichnet, dass**
die zwei sich gegenüberliegenden zweiten Seitenkanten (19, 20) des zweiten SIM-Moduls (12) senkrecht zu den zwei sich gegenüberliegenden ersten Seitenkanten (15, 16) des ersten SIM-Moduls (3) in einer gemeinsamen Ebene verlaufen.

3. Chipkarte nach Anspruch 1 oder 2,
**dadurch gekennzeichnet, dass**
das zweite SIM-Modul (12) in Draufsicht eine Rechteckform aufweist und die zweiten Haltestege (17, 18) an Längskanten des rechteckförmigen SIM-Moduls (12) angeordnet sind.

4. Chipkarte nach einem der vorangegangenen Ansprüche,
**dadurch gekennzeichnet, dass**
die Länge der ersten Haltestege (8, 9, 10, 11) 1,0 bis 1,5 mm, bevorzugt ca. 1,2 mm, und die Breite der ersten Haltestege (8, 9, 10, 11) 1,0 bis 2,0 mm, bevorzugt ca. 1,5 mm betragen.

5. Chipkarte nach einem der vorangegangenen Ansprüche,
**dadurch gekennzeichnet, dass**
die Länge der zweiten Haltestege (17, 18) 9,0 bis 11,0 mm, bevorzugt 10,0 mm beträgt.

6. Chipkarte nach einem der vorangegangenen Ansprüche,
**dadurch gekennzeichnet, dass**
der Abstand zwischen den ersten Haltestegen (8, 9) an der einen ersten Seitenkante (15) größer ist, als der Abstand zwischen den ersten Haltestegen (10, 11) an der gegenüberliegenden ersten Seitenkante (16).

7. Chipkarte nach Anspruch 6,
**dadurch gekennzeichnet, dass**
mindestens ein Ende der Kerbe (21, 22, 23, 24; 25, 26) gegenüber dem unmittelbar benachbarten Schlitzbereich (4, 5, 6, 7; 13, 14) mit einer Distanz beabstandet ist.

8. Chipkarte nach Anspruch 7,
**dadurch gekennzeichnet, dass**
die Distanz 0,05 bis 0,2 mm, bevorzugt 0,1 mm ist.

9. Chipkarte nach einem der vorangegangenen Ansprüche,
**dadurch gekennzeichnet, dass**
eine oberseitige und eine unterseitige Kerbe des ersten oder zweiten Haltestegs (8, 9; 10, 11) gemeinsam eine Sollbruchstelle des Haltestegs bilden.

10. Stanzform zum Vorstanzen eines ersten rechteckförmigen SIM-Moduls (3) in einem Kartengrundkörper (2) einer Chipkarte (1) und eines zweiten rechteckförmigen SIM-Moduls (12) in dem ersten SIM-Modul (3) mit einem ersten und einem zweiten die Außenkonturen der SIM-Module (3; 12) vorgebenden im Wesentlichen umlaufenden Stanzsteg , wobei der erste Stanzsteg an Stellen mit jeweils einer ersten Lücke und der zweite Stanzsteg an zwei Stellen mit jeweils einer zweiten Lücke unterbrochen sind, wobei die ersten Lücken jeweils paarweise und die zweiten Lücken jeweils einzeln in zwei sich gegenüberliegenden geradlinigen Abschnitten der Stanzstege angeordnet sind, und die Stanzform an Stelle der ersten und/oder zweiten Lücken Mittel zum Bilden von Kerben in durch die ersten und zweiten Lücken der Stanzform gebildeten Haltestege der gestanzten Chipkarte (1) aufweist.

## Claims

1. A chip card having a flat card base body (2) and an integrated rectangular first SIM module (3), wherein the first SIM module (3) is separated from the card base body (2) by means of first slot areas (4, 5, 6, 7) and is fastened to the base body (2) by first holding webs (8-11) bridging the first slot areas (4-7) in such a manner that it may be pressed out manually, wherein the first holding webs (8-11) are each associated with one of two opposite first lateral edges (15, 16) of the first SIM module (3), wherein a second SIM module (12) being integrated in the first SIM module (3) is separated from the first SIM module (3) by means of second slot areas (13, 14) and is fastened to the first SIM module (3) by at least two second holding webs (17, 18) bridging the second slot areas (13, 14) in such a manner that it may be pressed out manually, wherein the second holding webs (17, 18) extend along two opposite second lateral edges (19, 20) of the second SIM module (12) and wherein a notch (21, 22, 23, 24; 25, 26) extending in the longitudinal direction of the holding web is arranged on at least one of the first holding webs (8, 9, 10, 11) on the upper and/or lower side thereof.

2. The chip card according to claim 1,
**characterized in that** the two opposite second lateral edges (19, 20) of the second SIM module (12) extend perpendicularly to the two opposite first lateral edges (15, 16) of the first SIM module (3) in a common plane.

3. The chip card according to claims 1 or 2,
**characterized in that** the second SIM module (12) has a rectangular shape when viewed in plan view and **in that** the second holding webs (17, 18) are arranged at longitudinal edges of the rectangular SIM module (12).

4. The chip card according to any one of the preceding claims,
**characterized in that** the length of the first holding webs (8, 9, 10, 11) is 1.0 to 1.5 mm, preferably approximately 1.2 mm, and the width of the first holding webs (8, 9, 10, 11) is 1.0 to 2.0 mm, preferably approximately 1.5 mm.

5. The chip card according to any one of the preceding claims,
**characterized in that** the length of the second holding webs (17, 18) is 9.0 to 11.0 mm, preferably 10.0 mm.

6. The chip card according to any one of the preceding claims,
**characterized in that** the distance between the first holding webs (8, 9) is larger at the one first lateral edge (15) than the distance between the first holding webs (10, 11) at the opposite first lateral edge (16).

7. The chip card according to claim 6,
**characterized in that** at least one end of the notch (21, 22, 23, 24; 25, 26) is spaced at a distance from the directly adjacent slot area (4, 5, 6, 7; 13, 14).

8. The chip card according to claim 7,
**characterized in that** the distance is 0.05 to 0.2 mm, preferably 0.1 mm.

9. The chip card according to any one of the preceding claims,
**characterized in that** an upper side notch and a lower side notch of the first or second holding web (8, 9; 10, 11) jointly form a predetermined breaking point of the holding web.

10. A punching die for pre-punching a first rectangular SIM module (3) in a card base body (2) of a chip card (1) and a second rectangular SIM module (12) within the first SIM module (3) having a first and a second substantially circumferential punching web defining the outer outline of the SIM modules (3; 12), wherein the first punching web is discontinuous in places having a first gap each and the second punching web is discontinuous in two places having a second gap each, wherein the first gaps are each arranged in pairs and the second gaps are each arranged individually in two opposite linear portions of the punching webs, and wherein the punching die, instead of the first and/or second gaps, comprises means for forming notchs in the holding webs of the punched chip card (1) which holding webs are formed by the first and second gaps of the punching die.

## Revendications

1. Carte à puce comprenant un corps de base plat (2) et un premier module SIM rectangulaire intégré (3), ce premier module SIM (3) étant séparé du corps de base (2) au moyen de premières zones à fente (4, 5, 6, 7) et fixé sur le corps de base (2) par l'intermédiaire de premières brides de retenue (8 à 11) reliant les premières zones à fente (4 à 7) de sorte telle qu'il peut être manuellement retiré par pression des doigts, lesdites premières brides de retenue (8 à 11) étant respectivement associées à une de deux premières arêtes latérales opposées (15, 16) du premier module SIM (3), un second module SIM (12) intégré dans le premier module SIM (3) étant séparé de ce dernier au moyen de deux zones à fente (13, 14) et fixé sur le premier module SIM (3) par l'intermédiaire d'au moins deux deuxièmes bides de retenue (17, 18) reliant lesdites deuxièmes zones à fente (13, 14) de sorte telle qu'il peut être manuellement retiré par pression des doigts, les deux brides de retenue (17, 18) s'étendant le long de deux deuxièmes arêtes latérales opposées (19, 20) du deuxième module SIM (12), et une entaille (21, 22, 23, 24 ; 25, 26) étant placée sur la face inférieure et/ou la face supérieure d'au moins une des premières brides de retenue (8, 9, 10, 11) et s'étendant dans la direction longitudinale des brides de retenue.

2. Carte à puce selon la revendication 1,
**caractérisée en ce que**
les deux deuxièmes arêtes latérales opposées (19, 20) du deuxième module SIM (12) s'étendent dans un plan commun perpendiculairement aux deux premières arêtes latérales opposées (15, 16) du premier module SIM (3)

3. Carte à puce selon la revendication 1 ou 2,
**caractérisée en ce que**
le deuxième module SIM (12), vu de dessus, présente une forme rectangulaire et les deuxièmes brides de retenue (17, 18) sont placées sur les arêtes longitudinales du module SIM rectangulaire (12).

4. Carte à puce selon l'une des revendications précédentes,
**caractérisée en ce que**
la longueur des premières brides de retenue (8, 9, 10, 11) est comprise entre 1,0 et 1,5 mm, étant préférentiellement d'environ 1,2 mm, et la largeur des premières brides de retenue (8, 9, 10, 11) est comprise entre 1,0 et 2,0 mm, étant préférentiellement d'environ 1,5 mm.

5. Carte à puce selon l'une des revendications précédentes,
**caractérisée en ce que**
la longueur des deuxièmes brides de retenue (17, 18) est comprise entre 9,0 et 11,0 mm, étant préférentiellement de 10,0 mm.

6. Carte à puce selon l'une des revendications précédentes,
**caractérisée en ce que**
l'écart entre les premières brides de retenue (8, 9) sur la première arête latérale (15) est supérieur à celui compris entre les premières brides de retenue (10, 11) sur la première arête latérale opposée (16).

7. Carte à puce selon la revendication 6,
**caractérisée en ce que**
au moins une extrémité de l'entaille (21, 22, 23, 24 ; 25, 26) est à une certaine distance de la zone à fente directement voisine (4, 5, 6, 7 ; 13, 14).

8. Carte à puce selon la revendication 7,
**caractérisée en ce que**
cette distance est comprise entre 0,05 et 0,2 mm, étant préférentiellement de 0,1 mm.

9. Carte à puce selon l'une des revendications précédentes,
**caractérisée en ce que**
une entaille sur la face supérieure et une entaille sur la face inférieure de la première ou de la deuxième bride de retenue (8, 9 ; 10, 11) forment conjointement une zone de rupture privilégiée de la bride de retenue.

10. Forme de découpe pour le prédécoupage d'un premier module SIM rectangulaire (3) dans un corps de base (2) d'une carte à puce (1) et d'un deuxième module SIM rectangulaire (12) dans le premier module SIM (3) avec une première et une deuxième nervure de découpe pour l'essentiel périphérique et dessinant les contours extérieurs des modules SIM (3 ; 12), la première nervure de découpe étant interrompue à des endroits présentant respectivement un premier vide, et la deuxième nervure de découpe, à deux endroits présentant respectivement un deuxième vide, les premiers vides étant disposés par paire, et les deuxièmes vides, individuellement dans deux segments rectilignes opposés des nervures de découpe, et la forme de découpe présentant à la place des premiers et/ou des deuxièmes vides des moyens pour former dans les brides de retenue de la carte à puce (1) découpée des entailles formées par les premières et les deuxièmes vides de la forme de découpe.
